# EUROPÄISCHE PATENTSCHRIFT

(11) **EP 1 409 186 B1**
(45) Veröffentlichungstag und Bekanntmachung des Hinweises auf die Patenterteilung: **01.10.2008**
(21) Anmeldenummer: 02764526.6
(22) Anmeldetag: 22.07.2002
(51) Int. Cl.: B23H 9/00, B21J 15/50, B23H 9/14

(54) **ERODIER-VORRICHTUNG MIT EINEM ERODIER-KOPF ZUM ENTFERNEN VON METALLISCHEN VERBINDUNGSELEMENTEN**
EROSION DEVICE WITH AN EROSION HEAD FOR REMOVING METAL CONNECTING ELEMENTS
DISPOSITIF D'EROSION COMPRENANT UNE TETE D'EROSION CONCUE POUR ELIMINER DES ELEMENTS DE CONNEXION METALLIQUES

(30) Priorität: 20.07.2001 DE 10135587
(43) Veröffentlichungstag der Anmeldung: 21.04.2004
(73) Patentinhaber: EADS Deutschland GmbH, 85521 Ottobrunn (DE)
(72) Erfinder: MEISTER, Titus, 84048 Mainburg (DE); BERMANN, Johann, 85126 Münchsmünster (DE); FISCHER, Anton, 85051 Ingolstadt (DE); SCHMIDTNER, Max, 85077 Manching (DE)
(86) Internationale Anmeldenummer: PCT/DE2002/002670
(87) Internationale Veröffentlichungsnummer: WO 2003/013775

(56) Entgegenhaltungen:
- EP-A- 0 464 264
- PATENT ABSTRACTS OF JAPAN vol. 2000, no. 15, 6. April 2001 (2001-04-06) & JP 2000 343334 A (AMADA CO LTD), 12. Dezember 2000 (2000-12-12)

## Beschreibung

Die Erfindung betrifft eine Erodier-Vorrichtung mit einem Erodier-Kopf zum Entfernen von metallischen Verbindungselementen.

Zum Entfernen von Verbindungselementen wurden bisher Kernloch-Bohrer eingesetzt, die das zu entfernende Verbindungselement, z.B. den Niet, zentrisch zerspanen. Ein Nachteil dieses Bohrverfahrens ist, dass Strukturteile, die durch die Verbindungselemente zusammengehalten werden, beschädigt werden können. Dies ist insbesondere dann der Fall, wenn Nieten zu entfernen sind, da diese bis zu der zwischen dem Nietkopf und dem Niethals liegenden Übergangsstelle ausgebohrt werden müssen und an dieser Stelle die mit dem Niet verbundenen Strukturteile anliegen.

Im Flugzeugbau werden an nur einseitig zugänglichen Stellen Verbundnieten mit hochfesten Ziehdornen eingesetzt. Dadurch liegt gerade im Zentrum des Nietes ein sehr hartes Material vor, wodurch sich folgende weitere Probleme ergeben: Die Qualität der Zentrierung, d.h. die Genauigkeit, mit der die Bohrmaschine angesetzt wird, hängt von der manuellen Geschicklichkeit des Handwerkers ab, wodurch sich jedoch ein Streubereich mit relativ ungenauen Zentrierungen ergibt. Außerdem verschleißt das Werkzeug, d.h. der Bohrer, besonders stark an Ziehnieten in Abhängigkeit des ausgeübten Anpressdruckes. Ein weiterer Nachteil ist eine mögliche Wärmeentwicklung, die insbesondere dann entsteht, wenn die Schneidwirkung des Bohrers durch Abnutzung stark nachlässt oder der Niet mit dem Werkzeug mitdreht, wodurch erhöhte Reibungswärme entsteht und dadurch eine Schädigung der Struktur (Gefügeveränderung) eintreten kann. Aus diesen .Gründen eignet sich das Bohrverfahren mittels Kernloch-Bohrer auch zum Entfernen von Verbundnieten mit Ziehdornen nur eingeschränkt.

Abgesehen von den vorgenannten technischen Problemen verlangt dieses Bohrverfahren eine sehr starke körperliche Belastung des ausführenden Handwerkers, die zusätzlich die Qualität dieses Verfahrens beeinträchtigt.

Die US 3620635 offenbart eine Vorrichtung zur Nietaufentfernung nach dem Prinzip der Nietaufbohrung.

Aus der DE 36 42 775 C2 ist ein Verfahren und eine Einrichtung zum Entfernen von Verbindungselementen bekannt, bei dem mittels eines Nd:YAG-Laserstrahls Nietkopfflanken abgetrennt werden, wobei dieser Laserstrahl über eine Optik kreisförmig geführt wird und der entsprechende Kreisradius sowie die Eindringtiefe geregelt werden. Mittels einer Programmsteuereinrichtung werden die Drehgeschwindigkeit des Motors und die Einschaltzeiten des Lasers zur Erreichung bestimmter Eindringtiefen gesteuert.

Die US 4 259 562 A und die US 5 618 449 A offenbaren Nietenffemungsvorrichtungen mit einer axial beweglichen hohlen Elektrode, durch die mit dem Kühlmittel die durch den Erodiervorgang entstehenden Partikel abgeführt werden. Nach der US 5 618 449 A wird die Vorschubgeschwindigkeit der Elektrode gesteuert. In der US 5 618 449 A ist ein Kühlmittelsystem offenbart, mit dem ein konstanter Kühlmittelstrom bewirkt wird.

Nach der US 4 705 932 A wird zur Herstellung einer ersten Bohrung vor dem eigentlichen Erodiervorgang eine rotierende Rohr-Elektrode verwendet.
Dieses Dokument offenbart eine Anlage nach dem Oberbegriff des Anspruchs 1.
Aus der JP 03-049 833 AA ist ein Verfahren und eine Vorrichtung zur Positionierung einer Funkenerosionsmaschine bekannt, bei dem bzw. bei der eine Bildverarbeitungseinrichtung und eine Einrichtung zur Regelung der Positionierung der Vorrichtung offenbart ist.

Die Aufgabe der Erfindung ist, ein Bohrverfahren sowie eine Vorrichtung zur Durchführung des Verfahrens zu schaffen, mit dem ein möglichst wirtschaftliches Entfernen von Verbindungselementen aus Strukturteilen möglich ist, und die Strukturteile möglichst zuverlässig unbeschädigt bleiben.

Diese Aufgabe wird mit den Merkmale des unabhängigen Ansprüch gelöst. Weitere Ausführungsformen sind in den auf diese rückbezogenen Unteransprüchen angegeben.

Ein Vorteil der erfindungsgemäßen Vorrichtung liegt darin, daß mit dieser bzw. mit diesem eine Reduzierung von Prozesszeiten sowie eine Verringerung des Werkzeugverschleisses erreichbar ist. Die erfindungsgemäße Vorrichtung ermöglicht weiterhin einen ergonomisch vorteilhaften Ablauf ohne außergewöhnliche physische Belastung für den ausführenden Handwerker.

Im folgenden wird die Erfindung anhand der beiliegenden Figuren beschrieben, die zeigen:
- Fig. 1 einen schematischen Überblick über die Hauptfunktionen oder Hauptbestandteile der erfindungsgemäßen Funken-Erodieranlage mit einer Postionier-Einrichtung und einer Funken-Erodiereinrichtung,
- Fig. 2 eine Darstellung der Bewegungsrichtungen, die von der Positionier-Einrichtung in Bezug auf Positionen von verbindungselementen in einem Werkstück zur Verfügung gestellt werden,
- Fig. 3 ein Funktionsschema der Funkenerodier-Einrichtung,
- Fig. 4 einen Axialschnitt durch eine Anordnung aus dem Bohrkopf, einer Variante des elektrischen Kreislaufes sowie einem zur Bearbeitung vorgesehenen Verbindungselement mit einem Teil der durch dieses verbundenen Strukturteile.

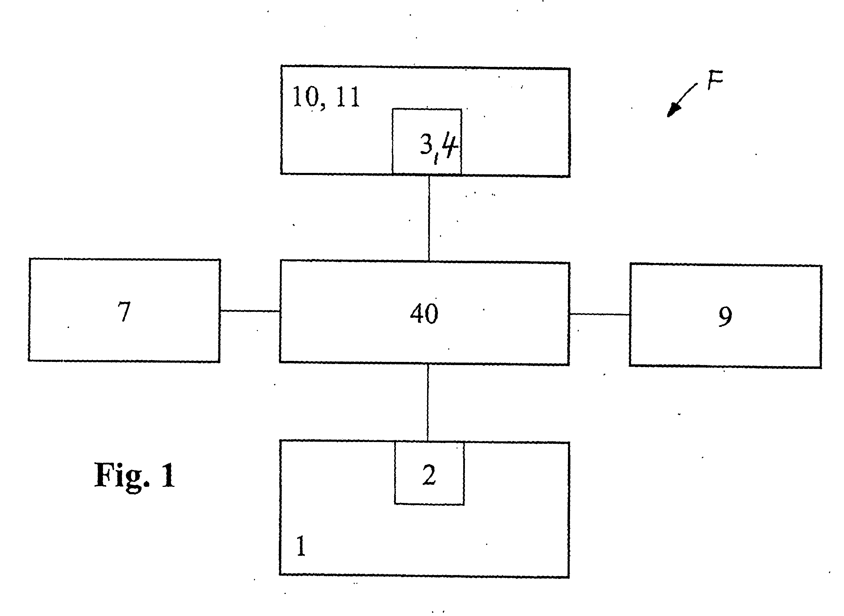

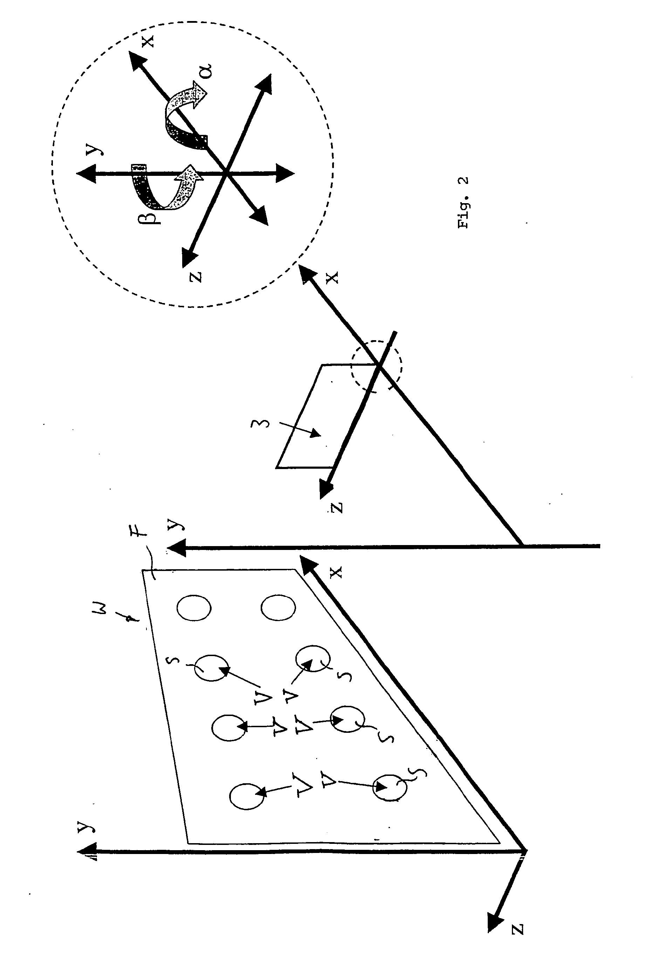

Die Funken-Erodieranlage F (Fig. 1) zur Entfernung von metallischen Verbindungselementen umfaßt eine Positionier-Anlage 1, die mittels einer Positionier-Steuerung 2 einen Erodierkopf 3 mit einem Bohrkopf 4 dreidimensional in Bezug auf ein von einem Werkstück W zu lösendes Verbindungselement V positioniert. Die dem Bohrkopf 4 zugewandte Strukturoberfläche ist in der Fig. 2 mit dem Bezugszeichen F und die dem Bohrkopf 4 zugewandte Oberfläche des Verbindungselements ist mit dem Bezugszeichen S bezeichnet. Der Bohrkopf 4, der von einem Bohrkopf-Träger 4a getragen ist, ist während des Erodierverfahrens zusätzlich mittels eines Rotationsantriebs 6 und einer linearen Zustelleinheit 5 in drei translatorischen und zwei rotatorischen Bewegungsrichtungen, also in insgesamt insgesamt fünf Freiheitsgraden, verstellbar, wobei die Erodierachse mit der Verlängerung der Zustellachse der linearen Zustelleinheit 5 identisch ist.

Am Bohrkopf 4 ist eine Positionier-Sensorik 7 angeordnet, mittels der eine Bestimmung der Lage des Bohrkopfs 4 relativ zum jeweils zu entfernenden Vebindungselement V vornehmbar ist. Die Positionier-Sensorik 7 ist vorzugsweise als Flächensensor und insbesondere als Laser-Sensor realisiert und kann zusätzlich eine Videokamera aufweisen. Bei Verwendung einer Videokamera ist der Positionier-Sensorik 7 vorzugsweise eine Bildverarbeitungs-Einheit 9 zugeordnet, mit der die Erkennung der Position des Verbindungselements V durch eine verbesserte Erkennung der Verbindungselement-Geometrie verbessert werden kann. Die Videokamera kann optional auch zur Kontrolle des chemisch-mechanischen Erodierprozesses vorgesehen sein. Die Steuerung der Positionier-Anlage 1 auf der Basis der Daten von der Positionier-Sensorik und gegebenenfalls der Bildverarbeitungs-Einheit 9 wird von der Positionier-Steuerung 2 durchgeführt. Dabei werden die erforderlichen Parameter zur relativen Ausrichtung des Bohrkopfträgers 4a zum Werkstück W bzw. zum Verbindungselement V durch die Positionier-Sensorik 7 erfasst. Bei Verwendung der Bildverarbeitungs-Einheit 9 erfolgt die exakte Positionierung durch eine Bilderkennungs-Sensorik in Form z.B. zumindest eines Kameramoduls, und eines geeigneten Bildverarbeitungssystems, wobei die Bilderkennungs-Sensorik vorzugsweise am Bohrkopfträger 4a befestigt ist. Die Videokamera, sofern sie vorgesehen ist, ist mit einem Kontrollmonitor 9a über ein Video-Signalkabel 9b verbunden. Statt der Videokamera 9 kann jedoch auch jede andere Art einer zweckmäßigen Kontrolleinrichtung zur Kontrolle des Grobpositionierens vorgesehen sein. Der Vorteil bei der Verwendung einer Videokamera ist, daß diese auch zur Kontrolle des Erodierprozesses verwendet werden kann.

Bei der Verwendung von zwei Kameramoduln ermöglicht das erste Kameramodul die Erfassung einer größeren Anzahl von Verbindungselementen oder Verbindern V, das über einem separaten Monitor auch für die Groborientierung und Positionierung des Bohrkopfes 4 in bezug auf das Werkstück W verwendet werden kann. Mit einem zweiten Kameramodul werden die einzelnen Verbindungselemente V für das Bildverarbeitungssystem optisch erfasst. Anhand dieser Bilddaten ermittelt das Bildverarbeitungssystem den Verbindermittelpunkt und bestimmt die Koordinaten, die abgespeichert werden und über die der Bohrkopf jederzeit wieder exakt über dem einmal erfassten Verbinder platziert werden kann.

Bei der Verwendung nur eines Kameramoduls können die beschriebenen Funktionen auch von diesem einen Kameramodul erfüllt werden. Es können jedoch auch mehr als zwei Kameramodule vorgesehen sein, auf die die beschriebenen Funktionen in zweckmäßiger Weise verteilt werden können.

Die eigentliche Entfernung der Verbinder erfolgt durch eine Funken-Erodieranlage 10 mit dem Erodierkopf 3 und einer stationären Ausrüstung 11. Der Erodierkopf 3 bereitet das Verbindungselement V durch Schwächung oder Durcherodieren des Schaftes des Verbindungselements V soweit vor, dass dieser im Nachgang durch Ausschlagen oder Herausziehen desselben entfernt werden kann. Die Steuerung des Erodierkopfes 4 erfolgt mittels einer Erodier-Steuereinheit 13.

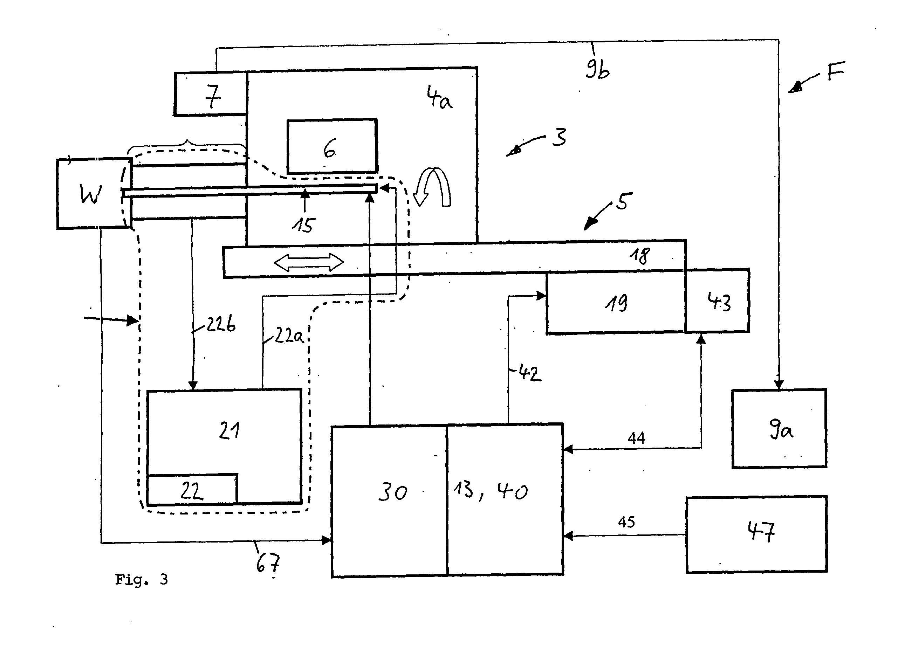

Die Funken-Erodieranlage (Fig. 2 und 3) umfaßt zur Durchführung des eigentlichen Erodiervorgangs den Erodierkopf 3 mit einer drehbaren Rohrelektrode 15 und einen Spülkäfig 17. Zur Bewerkstelligung der Drehung der Rohrelektrode 15 ist der Rotationsantrieb 6 vorgesehen. Der Rotationsantrieb 6 mit dem Bohrkopf 3 sitzt auf einem Zustell-Schlitten 18 der linearen Zustelleinheit 5, die ferner zu dessen Antrieb einen Zustellantrieb 19 aufweist. Gesteuert von der Erodier-Steuereinheit 13 wird mittels des Zustellantriebs 19 der Vorschub der Rohrelektrode 15 in der z-Richtung (Fig. 2) bewerkstelligt. Der Rotationsantrieb 6 ermöglicht Drehbewegungen des Bohrkopfs 4 um zwei senkrecht verlaufende Achsen, in der Darstellung der Fig. 2 um die Vertikal- oder x-Achse und um die Horizontal- oder y-Achse. Durch die Drehung um die x-Achse ergibt sich ein Verstellwinkel α, während sich durch die Drehung um die y-Achse ein Verstellwinkel β des Erodierkopfes 3 ergibt.

Durch die Positionieranlage 1 kann der Erodierkopf 3 in der y- und der x-Richtung positioniert werden. Dies geschieht vorzugsweise vor dem eigentlichen Erodierprozeß. Die Positionieranlage 1 kann hierzu durch ein Flächenportal mit zwei Linearachsen in der x- und der y-Richtung realisiert sein. Es können jedoch auch andere Positionier-Einrichtungen nach dem Stand der Technik verwendet werden. Durch die Vor-Positionierung des Erodierkopfes 3 mittels der Positionieranlage 1 wird der Erodierkopf 3 an eine geeignete Stelle der Oberfläche S des zu entfernenden Verbindungselements V gebracht, von der aus der Erodierprozeß starten kann. Wenn die Vor-Positionierung des Erodierkopfes 3 erfolgt ist, wird die Positionieranlage zunächst arretiert, bis gegebenenfalls noch Korrekturen während des Erodierprozesses erforderlich sind. Im Zusammenhang mit dieser Vor-Positionierung wird der Erodierkopf 3 zusätzlich mittels des Rotationsantriebs 6 ausgerichtet, um auch eine geeignete Ausrichtung des Erodierkopfes 3 vor dem Beginn des Erodierprozesses zu bewerkstelligen. Diese Vor-Positionierung wird erfindungsgemäß automatisch mittels der Positionier-Sensorik, gegebenenfalls mittels der Bildverarbeitungseinheit 9 sowie mittels der Positionier-Steuerung 2 durchgeführt, kann jedoch auch halb-automatisch oder manuell erfolgen.

Im folgenden wird die bevorzugte Gestaltung der Positionier-Anlage 1 als Flächenportal beschrieben:

Das Flächenportal weist eine x- und eine y- Linearachse auf, wodurch der Bohrkopf 4 bzw. der Erodierkopf 3 parallel zur Werkstückfläche des Werkstücks W und insbesondere zum Kopf oder der Oberfläche S des zu entfernenden Verbindungselements V in dem Werkstück W verfahren kann. Die Annäherung des Bohrkopfes 4 an das Werkstück W erfolgt über eine weitere Linearachse, die vorzugsweise drehbar um x- und y- Achse des Portalsystems gelagert ist. Die Lageorientierung des Bohrkopfes 4 relativ zum Werkstück W (orthogonal zur Strukturoberfläche F) wird über drei Laser-Abstandssensoren ermittelt, die auf dem Bohrkopfträger, parallel zur Achse der am Erodierkopf 3 angeordneten Elektrode 15 befestigt sind. Diese Methode wird insbesondere dann verwendet, wenn das Verbindungselement derart von der der Erodieranlage gegenüberliegenden Seite des Werkstücks W zugänglich ist, so daß dieses durch das Erodieren einer Nut nur soweit geschwächt werden muss, dass es nachfolgend nach hinten ausgeschlagen werden kann. Fehlt diese Zugänglichkeit aus Sicht der Erodieranlage nach hinten, muss der komplette Verbinderschaft durcherodiert werden, so dass das Verbindungselement V nach vorne herausgezogen werden kann. Dazu wird bei der beschriebenen Ausführungsform ein weiterer Laserabstandssensor, vorzugsweise ein Punktlaser, verwendet, über den der Bohrkopf 4 relativ zur Verbinderoberfläche S ausgerichtet wird, um beim Erodieren dem Verlauf des Verbinderschafts exakt axial folgen zu können.

Mit einer Positionieranlage der beschriebenen Art kann eine Werkstück-Fläche von ca. 2,7m x 2,7m bearbeitet werden, wobei eine Positioniergenauigkeit von ± 0,1 mm erreichbar ist.

Die technische Ausprägung der Positionieranlage kann verschiedene Kombinationen aus Lokal- und Global-Positioniertätigkeit umfassen (Maximierung, Miniaturisierung).

Während des Erodierprozesses können je nach der Position und Lage des Werkstücks W mit den zu entfernenden oder zu erodierenden Verbindungselementen V Korrekturen in der Ausrichtung des Erodierkopfes 3 bzw. der Elektrode mittels des Rotationsantriebs 6 oder auch in der x- oder y-Richtung erforderlich werden. Diese Korrekturen können auch während des Erodierprozesses erfolgen, wozu auch die Positionier-Sensorik 7, gegebenenfalls die Bildverarbeitungs-Einheit 9 und die Positionier-Steuerung 2 verwendet werden können.

Neben dieser bevorzugten Ausführungsform können anstatt oder neben der Positionier-Anlage 1 und dem Rotationsantrieb 6 erfindungsgemäß auch andere Bewegungs-Mimiken nach dem Stand der Technik zu Positionierung und Ausrichtung des Erodierkopfes 3 in der beschriebenen Art vorgesehen sein.

Der Spülkäfig 17 ist Bestandteil eines Spülsystems 20, das ferner eine Filteranlage 21 und eine Pumpe 22 umfasst. Mit der Pumpe 22 wird ein Medium, das als Dielektrikum dient, über eine Zuleitung 22a dem Spülkäfig 7 zugeführt, das aus diesem mittels einer Absaugleitung 22b wiederum der Filteranlage 21 zugeführt werden kann. Die Filteranlage 21 dient zur Reinigung des Dielektrikums, während die Pumpe 22 dazu dient, das Dielektrikum mit ausreichendem Druck dem Spülkäfig 7 zuzuführen.

Ein Erodierenergiegerät 30 ist vorgesehen, das über eine Leitung 31 Erodierstrom an die Elektrode 15 schickt, mit dem der Erodierprozess am Werkstück bewirkt wird. Ein Erodiersteuergerät 40 steuert den Erodiervorgang. Es gibt über eine Kommandoleitung 42 Kommandosignale an den Zustellantrieb 19. Dies kann über eine im Steuergerät 40 integrierte Regelungsfunktion bewirkt werden, die als Regelgröße die Position des Zustell-Schlittens 18, der den Elektrodenvorschub bewirkt, empfängt. Hierzu ist ein Sensor 43 vorgesehen, der die Position abgreift. Mittels der Signalleitung 44 wird die Ist-Position der Linear-Achse bzw. des Bohrkopfes dem Steuergerät 40 zugeführt, das mittels eines Reglers Kommandos für den Zustellantrieb 19 abgibt. Der Sensor 43 kann beispielsweise als Drehgeber gestaltet und mit dem Zustellantrieb 19 verbunden sein.

Das Steuergerät 40 steht über eine Eingabeleitung 45 mit einem Eingabegerät der Prozesssteuerung 47 in Verbindung, mit dem Prozessvorgaben in das Steuergerät 40 zur Gestaltung des Erodierverfahrens eingeführt werden können. Das Erodier-Steuergerät sendet Steuersignale an die Erodier-Energiequelle 30, mit denen die Stärke und der Verlauf des Erodier-oder Spaltstroms bestimmt und kontrolliert wird, z.B. die Impulslängen, die durchschnittlichen Amplitudenhöhen und Amplituden-Maxima oder die Impulspausen des Erodier-Stroms. Dabei können verschiedene Parameter einfließen wie Elektroden-Werkstoff, Werkstück-Material und -Größe oder das verwendete Dielektrikum. Die vom Erodier-Steuergerät ermittelten Steuervorgaben stellen ein Optimum für den von der Erodier-Energiequelle abzugebenden Strom dar.

Der Spülkäfig 17 (Fig. 3) schließt einen Innenraum 7a um das in dem Werkstück W sitzende Verbindungselement V in einem Bereich der Rohrelektrode 15 ab. Dem Raum 7a wird über die Zuleitung 22a ein Dielektrikum zugeführt. Als Dielektrikum wird vorteilhafterweise entionisiertes Wasser mit einer Leitfähigkeit von vorzugsweise 10 bis 60 µS/cm, jedoch je nach Anwendungsfall auch über diesen Bereich hinaus, verwendet. Im Betrieb der Funkenerodier-Anlage ist der Raum 7a nahezu vollständig mit einem Dielektrikum gefüllt. Um den Raum 7a gegen den Austritt von Dielektrikum abzudichten, ist zum einen eine Dichtung 62 zwischen dem Spülkäfig 17 und der Rohr- elektrode 5 sowie eine Dichtung 63 zum Abdichten des Spülkäfigs 17 gegenüber dem Werkstück W oder der Struktur vorgesehen.

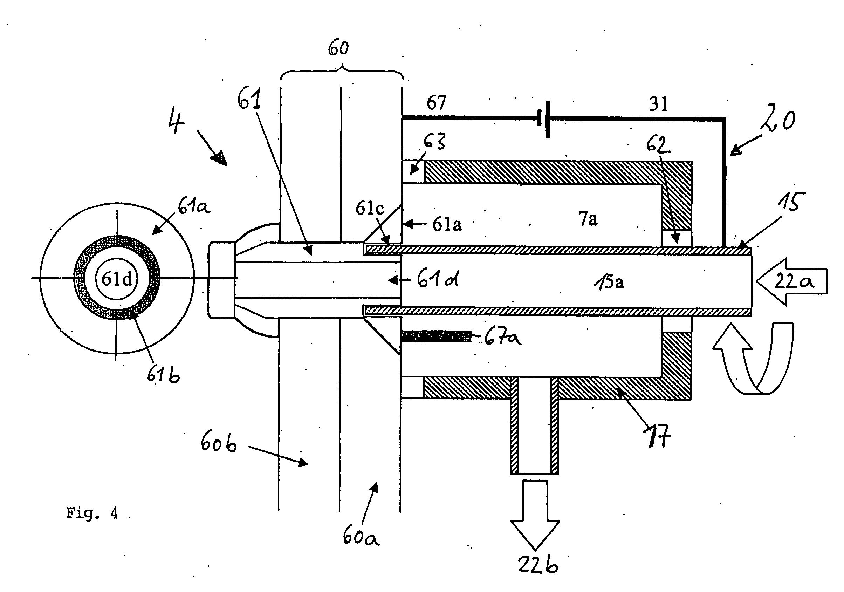

Das Werkstück W kann mehrere Strukturteile im Bereich des Verbindungselements V umfassen Das Werkstück oder die Struktur ist in der Figur 4 mit dem Bezugszeichen 60 und das Verbindungselement ist in der Figur 4 mit dem Bezugszeichen 61 bezeichnet. Falls beispielsweise das Verbindungselement 61 ein Niet ist, kann die Struktur 60 üblicherweise eine Beplankung 60a und eine Substruktur 60b wie z.B. ein Spant in einer Flugzeugstruktur, umfassen. Der Spülkäfig 17 ist so angeordnet, dass die Stelle an der Struktur 60, an der das Verbindungselement 61 angeordnet ist, vollständig mit Dielektrikum umspült werden kann. Der Spülkäfig 17 muss also das gesamte Verbindungselement 61 auf der Seite der Rohrelektrode 15 umschließen. Mit dieser Variante der vorher dargestellten abgedichteten Punktspülung ist der Erodiervorgang in beliebiger räumlicher Lage des Werkstücks 61 oder auch des Bohrkopfes 4 durchführbar.

Ein Vorteil dieser Gestaltung des Spülsystems 20 ist, daß es eine abgedichtete, lageunabhängige Erodierung des Verbindungselements V durch Punktspülung mit Massekontaktierung am Verbindungselement ermöglicht.

Die Rohrelektrode 15 ist drehbar gegenüber dem Spülkäfig 7 sowie gegenüber dem Verbindungselement 61 angeordnet und durchragt den Spülkäfig 7. An das Werkstück 60 ist die Masseleitung 67 angeschlossen, die alternativ auch über eine Spezialkontaktierung 67a mit dem Verbindungselement 61 (Fig. 4) verbunden werden kann. Letzter Fall ist erfindungsgemäß dann vorzusehen, wenn die Struktur 60 nur schlecht oder nicht elektrisch leitend ist, also beispielsweise eine CFK-Struktur ist. Der Innenraum 15a der Rohrelektrode 15 wird über die Zuleitung 22a mit Dielektrikum beschickt, das bis zu der der Rohrelektrode 5 zugewandten Oberfläche 61a bzw. S (Fig. 2) des Verbindungselements 61 bzw. V hingeführt wird.

Die Fig. 4 zeigt einen Zustand, bei dem die Rohrelektrode 15 aufgrund des Erodierprozesses bereits Ringnute 61 b im Verbindungselement 61 gebildet hat. Es ist erkennbar, dass sich zwischen der Ringnut 61 b und der Rohrelektrode 5 ein Zwischenraum 61c ausbildet. Das im Innenraum 7a befindliche Dielektrikum strömt durch den Zwischenraum 61c in den Raum 7a des Spülkäfigs 7, um über die Absaugleitung 22b zur Filteranlage 21 geführt werden zu können. Das aus dem Zwischenraum 61c kommende Dielektrikum führt Abtragmaterial mit sich, das im Erodierprozess aus dem Verbindungselement 61 entstanden ist. Auf diese Weise wird Abtragmaterial über die Leitung 22b von der Bearbeitungsstelle entfernt.

Die Rohrelektrode 15 wird mittels des Rotationsantriebs 6 für den Erodierprozess in Drehung versetzt, um ungleichen Verschleiß der werkstückseitigen Oberfläche der Elektrode zu verhindern. Dies ist insbesondere dann wichtig, wenn die Oberfläche 61 a des Verbindungselements vor dem Erodierprozess eine unebene, z.B. mit Nuten versehene Oberfläche aufweist. Im Betrieb wird zu-nächst die Elektrode 15 achsenparallel zum zu lösenden Verbindungselement 61 bzw. flächenorthogonal zur Struktur 60 angesetzt. Dies geschieht über die Sensorik 7, die dazu vorzugsweise als Laserabstandssensorik realisiert ist. Die Rohrelektrode 15 wird in Drehung versetzt und die Pumpe 22 eingeschaltet, um den Innenraum 15a der Rohrelektrode 15 mit Dielektrikum zu beschicken. Dadurch fließt das Dielektrikum von der Filteranlage 21 über die Zuleitung 22a durch den Innenraum 5a der Rohrelektrode und den Zwischenraum 61c in den Innenraum 7a und anschließend über die Absaugleitung 22b zurück in die Filteranlage 21.

Zur Vorbereitung des eigentlichen Erodierprozesses ist eine Masseverbindung zum Werkstück oder zum Verbindungselement mittels des Spezialkontaktes 67a herzustellen, im Spülsystem 20 der Füllstand des Dielektrikums zu kontrollieren bzw. Dielektrikum nachzufüllen und ein in Bezug auf den zu entfernenden Verbindertyp geeigneter Elektrodentyp mit geeignetem Durchmesser in den Bohrkopf 4 einzuspannen.

Anschließend wird der Bohrkopf 4 mittels der Positionieranlage 1 in Bezug auf das zu entfernende Verbindungselement V bzw. 61 ausgerichtet und die Elektrode 15 gegebenenfalls mit Hilfe der Bildverarbeitungs-Einheit 9 auf die Oberfläche S bzw. 61a des Verbindungselements V bzw. 61 zentriert sowie erforderliche Feinkorrekturen vorgenommen. Daraufhin wird der eigentliche Erodierprozeß durchgeführt.

Gegebenenfalls werden erodierte Verbindungselemente mittels Durchschlag entfernt.

Diese Schritte können an weiteren Vebindungselementen wiederholt werden.

## Patentansprüche

1. Funken-Erodieranlage zum Entfernen von Verbindungselementen aus einer Struktur (W, 60) mit einem Bohrkopf (3), einem Rotationsantrieb (6), mit dem ein Werkzeug in Drehung versetzt wird, einer Positionieranlage (15) zur Bewegung des Werkzeugs sowie einer Prozess-Steuerung (47) zur Steuerung der Gesamtanlage,
wobei die Funken-Erodieranlage eine Energiequelle (30) und einen elektrischen Stromkreis umfasst und das Werkzeug eine Rohrelektrode (15) ist, durch deren Innenraum (15a) ein Dielektrikum bis zu der Oberfläche (61 a) des zu lösenden Verbindungselements (61) geführt werden kann, um eine Spannung zwischen der Rohrelektrode (15) und dem zu lösenden Verbindungselement (61) zur Bewerkstelligung einer Funkenerosion zu bewirkten,
**dadurch gekennzeichnet,**
**dass** der Rotationsantrieb (6) zur Rotation der Rohr-Elektrode auf einem linear beweglichen Zustellschlitten angeordnet ist und eine Positionier-Sensorik am Bohrkopf zur Bestimmung der Lage des Bohrkopfes relativ zum Verbindungselement vorgesehen ist,
**dass** zumindest eine Videokamera mit einer zugehörigen Monitor-Einheit mit einer Bildverarbeitungs-Einheit zur Positionierung des Bohrkopfes und zur Kontrolle des chemisch-mechanischen Erodier-Prozesses vorgesehen ist,
**dass** die Prozess-Steuerung (47) einen Laserabstands-Sensor in Verbindung mit einem Erodier-Steuergerät (40) umfasst, um über die Position des Zustell-Schlittens (18) die Position des Bohrkopfes (4) relativ zur Verbinder-Oberfläche (S) zu kontrollieren, und Signale an die Energiequelle (30) sendet zur Kontrolle der Impulslängen, der durchschnittlichen Amplitudenhöhen und Amplituden-Maxima sowie die Impulspausen des Erodier-Stroms.

2. Funken-Erodieranlage zum Entfernen von Verbindungselementen nach dem Anspruch 1, **dadurch gekennzeichnet, dass** mittels eines Spülkäfigs (17) und einer Dichtung (63) der Raum (7a) um die Oberfläche des zu bearbeitenden Verbindungselements (V, 61) gegen den Austritt von Dielektrikum abgedichtet ist und ein Bereich um die zu bearbeitende Oberfläche (S) des Verbindungselements auf der Seite der Rohrelektrode (15) und ein Teil der Rohrelektrode (15) mit Dielektrikum umspült werden kann.

3. Funken-Erodieranlage zum Entfernen von Verbindungselementen nach einem der voranstehenden Ansprüche, **dadurch gekennzeichnet, dass** eine Positionier-Anlage (1) und am Bohrkopf (4) eine Sensorik (7) zur Positionierung des Bohrkopfes (4) relativ zum Verbindungselement (V, 61) vorgesehen ist.

4. Funken-Erodieranlage zum Entfernen von Verbindungselementen nach einem der voranstehenden Ansprüche, **dadurch gekennzeichnet, dass** eine Erodier-Steuereinheit (40) vorgesehen ist, die zusammen mit der Sensorik (7) die Kontrolle des Erodier-Prozesses erlaubt.

## Claims

1. Spark erosion system for removing connecting elements from a structure (W, 60), comprising a drill head (3), a rotary drive (6) with which a tool is set in rotation, a positioning unit (15) for moving the tool, and a process control (47) for controlling the entire system, wherein the spark erosion system comprises an energy source (30) and an electric circuit, and the tool is a tubular electrode (15), through the interior space (15a) of which a dielectric can be directed up to the surface (61a) of the connecting element (61) to be released in order to produce a voltage between the tubular electrode (15) and the connecting element (61) to be released in order to effect spark erosion, **characterized in that** the rotary drive (6) for rotating the tubular electrode is arranged on a linearly movable infeed slide, and a positioning sensor system is provided on the drill head for determining the position of the drill head relative to the connecting element, **in that** at least one video camera with an associated monitor unit having an image-processing unit is provided for positioning the drill head and for monitoring the chemical-mechanical erosion process, **in that** the process control (47) comprises a laser distance sensor in combination with an erosion control unit (40) in order to monitor, via the position of the infeed slide (18), the position of the drill head (4) relative to the connector surface (S) and transmits signals to the energy source (30) for monitoring the pulse lengths, the average amplitude levels and amplitude maxima and the interpulse periods of the erosion current.

2. Spark erosion system for removing connecting elements according to Claim 1, **characterized in that**, by means of a flushing cage (17) and a seal (63), the space (7a) around the surface of the connecting element (V, 61) to be treated is sealed against the escape of dielectric, and dielectric can flow with a flushing action around a region around the surface (S), to be treated, of the connecting element on the side of the tubular electrode (15) and around part of the tubular electrode (15).

3. Spark erosion system for removing connecting elements according to either of the preceding claims, **characterized in that** a positioning unit (1) and, at the drill head (4), a sensor system (7) are provided for positioning the drill head (4) relative to the connecting element (V, 61).

4. Spark erosion system for removing connecting elements according to one of the preceding claims, **characterized in that** an erosion control unit (40) is provided which, together the sensor system (7), allows the erosion process to be monitored.

## Revendications

1. Équipement d'électroérosion destiné à retirer des éléments de liaison d'une structure (W, 60) comprenant une tête de perçage (3), un mécanisme d'entraînement rotatif (6) avec lequel un outil est mis en rotation, un équipement de positionnement (15) pour déplacer l'outil ainsi qu'une commande de processus (47) pour commander la totalité de l'équipement, l'équipement d'électroérosion comprenant une source d'énergie (30) et un circuit électrique et l'outil étant une électrode tubulaire (15) à travers l'espace intérieur (15a) de laquelle peut être acheminé un diélectrique jusqu'à la surface (61a) de l'élément de liaison (61) à détacher afin de provoquer une tension entre l'électrode tubulaire (15) et l'élément de liaison (61) à détacher en vue de réaliser une électroérosion,
**caractérisé en ce**
**que** le mécanisme d'entraînement rotatif (6), pour mettre l'électrode tubulaire en rotation, est disposé sur un chariot d'approche à mobilité linéaire et il est prévu un dispositif de détection de la position sur la tête de perçage pour déterminer la position de la tête de perçage par rapport à l'élément de liaison,
**qu'**il est prévu au moins une caméra vidéo avec une unité à moniteur associée munie d'une unité de traitement d'image pour le positionnement de la tête de perçage et pour le contrôle du processus d'érosion chimico-mécanique,
**que** la commande de processus (47) comprend un détecteur d'écart à laser en liaison avec un module de commande d'érosion (40) afin de contrôler la position de la tête de perçage (4) par rapport à la surface du connecteur (S) par le biais de la position du chariot d'approche (18), et envoie des signaux à la source d'énergie (30) pour contrôler la durée des impulsions, les hauteurs d'amplitude moyennes et les maximums d'amplitude ainsi que les pauses d'impulsion du courant d'érosion.

2. Équipement d'électroérosion destiné à retirer des éléments de liaison selon la revendication 1, **caractérisé en ce que** l'espace (7a) autour de la surface de l'élément de liaison (V, 61) à usiner est fermé hermétiquement pour empêcher la sortie de diélectrique au moyen d'une cage de rinçage (17) et d'une garniture d'étanchéité (63) et une zone autour de la surface (S) à usiner de l'élément de liaison sur le côté de l'électrode tubulaire (15) et une partie de l'électrode tubulaire (15) peuvent être rincées avec le diélectrique.

3. Équipement d'électroérosion destiné à retirer des éléments de liaison selon l'une des revendications précédentes, **caractérisé en ce qu'**il est prévu un équipement de positionnement (1) ainsi qu'un dispositif de détection (7) sur la tête de perçage (4) pour positionner la tête de perçage (4) par rapport à l'élément de liaison (V, 61).

4. Équipement d'électroérosion destiné à retirer des éléments de liaison selon l'une des revendications précédentes, **caractérisé en ce qu'**il est prévu une unité de commande d'érosion (40) qui, en collaboration avec le dispositif de détection (7), permet de contrôler le processus d'érosion.
